# EUROPÄISCHE PATENTSCHRIFT

(11) **EP 0 666 627 B1**
(45) Veröffentlichungstag und Bekanntmachung des Hinweises auf die Patenterteilung: **20.05.1998**
(21) Anmeldenummer: 95100714.5
(22) Anmeldetag: 19.01.1995
(51) Int. Cl.: H02B 13/025, H01H 33/53

(54) **Lichtbogenabsorber**
Arc absorbing device
Dispositif absorbant des arcs électriques

(30) Priorität: 03.02.1994 DE 4403355
(43) Veröffentlichungstag der Anmeldung: 09.08.1995
(73) Patentinhaber: Gec Alsthom T & D GmbH, 70794 Filderstadt (DE)
(72) Erfinder: Nather, Thomas, D-70180 Stuttgart (DE); Paulsen, Jörg, D-70794 Filderstadt (DE)
(74) Vertreter: Finsterwald, Manfred, Dipl.-Ing., Dipl.-Wirtsch.-Ing.

(56) Entgegenhaltungen:
- DE-A- 3 436 108
- DE-A- 4 141 685
- US-A- 2 654 012
- US-A- 3 374 332

## Beschreibung

Die Erfindung betrifft einen Lichtbogenabsorber, insbesondere für luftisolierte Schaltzellen von Mittelspannungsanlagen.

Beim Auftreten von Lichtbögen, insbesondere beim Auftreten von Störlichtbögen muß dafür gesorgt werden, daß durch die entstehenden heißen Gase zum einen keine Gefährdung von Personen und zum anderen auch keine Beschädigung benachbarter Anlagen oder Anlagenteile erfolgt.

In der US-A-2 654 012 ist eine Löschkammer für Leistungsschalter beschrieben, in der zur Kühlung und Löschung des Lichtbogens zwischen den Schalterkontakten und einer perforierten gaserzeugenden Platte mehrere aus magnetischen und nicht magnetischen Plattenteilen zusammengesetzte Metallplatten angeordnet sind, die eine Aufteilung des Lichtbogens in mehrere kleinere Abschnitte bewirken. Bei einer Unterbrechung größerer Ströme wird der Lichtbogen durch ein Magnetfeld in den Bereich der eine höhere Hitzebeständigkeit aufweisenden nicht magnetischen Plattenteile auf der Seite der gaserzeugenden Platte abgelenkt. Erreicht der Lichtbogen schließlich die der gaserzeugenden Platte benachbarten äußeren Enden dieser nicht magnetischen Plattenteile, so wird aus der gaserzeugenden Platte Gas freigesetzt, wodurch die Löschung zusätzlich unterstützt wird. An den äußeren Enden der nicht magnetischen Plattenteile können zusätzliche Plattenteile befestigt sein, um die Spalte zwischen den äußeren Enden der nicht magnetischen Plattenteile etwas kleiner zu halten als die Spalte am den magnetischen Plattentteilen benachbarten Enden und dadurch, bedingt durch das stärkere Magnetfeld und den höheren Anteil an leitendem Metall, die Ablenkung des Lichtbogens in Richtung der gaserzeugenden Platte zu beschleunigen. Die kleineren Spalte an den äußeren Enden der nicht magnetischen Plattenteile können anstatt durch die zusätzlichen Plattenteile auch durch eine geringe relative Neigung der den Lichtbogen aufnehmenden Platten eingestellt werden. Diese Platten sind zudem mit Schlitzen versehen, um den Lichtbogen über diese Schlitze auf die Platten zu ziehen.

Aufgabe der Erfindung ist es, einen sowohl kompakten als auch hinsichtlich der erzielbaren Abkühlung der Lichtbogengase besonders wirksamen Absorber zu schaffen, der zudem konstruktiv einfach und wirtschaftlich zu realisieren sein soll.

Gelöst wird diese Aufgabe zumindest im wesentlichen durch die Merkmale des Patentanspruchs 1.

Durch die Schaffung von sich verjüngenden, von Wärmetauscherblechen begrenzten Strömungskanälen wird in den Kanälen eine hohe Turbulenz und dadurch ein sehr ausgeprägter Wärmeübergang auf die bevorzugt aus Stahlblechen bestehenden Wärmetauscherbleche gewährleistet. Die überraschend gute Wärmeübergangsfunktion der Wärmetauscherbleche ist zumindest zu einem ganz wesentlichen Teil eine Folge davon, daß sich aufgrund des sich verjüngenden Strömungskanals und der daraus resultierenden Turbulenzen nur eine minimale Grenzschichtdicke der Strömung an den Wärmetauscherplatten einstellt und somit die Wärmetauscherplatten über ihre gesamte Fläche volle Wirksamkeit entfalten können.

Nach einer bevorzugten Ausgestaltung der Erfindung sind im durchströmten Gehäuse zumindest zwei Gruppen von in Strömungsrichtung der Gase aufeinanderfolgenden, jeweils sich verjüngende Strömungskanäle bildenden Wärmetauscherblechen vorgesehen, wobei diese Wärmetauscherbleche und damit die von ihnen gebildeten Strömungskanäle so orientiert sind, daß vorzugsweise senkrecht zueinander angeordnete Wärmetauscherbleche bzw. Strömungskanäle in den beiden Gruppen vorliegen.

Auf diese Weise werden die in der ersten Gruppe von Wärmetauscherblechen bereits abgekühlten Gase, die aus den schlitzförmigen Auslässen der gebildeten Strömungskanäle austreten, in der zweiten Gruppe von Wärmetauscherblechen nochmals auf die von dieser zweiten Gruppe von Wärmetauscherblechen gebildeten Kanäle aufgeteilt und in einen ausgeprägt turbulenten Zustand versetzt, so daß die Wärmetauscherbleche der zweiten Gruppe wiederum vollflächig wirksam werden und gewährleisten, daß ausgangsseitig eine Temperaturerniedrigung der Lichtbogengase erhalten wird, die jegliche Gefährdungseffekte ausschließt.

Von besonderem Vorteil ist es ferner, wenn zumindest zwischen aufeinanderfolgenden Gruppen von sich verjüngende Strömungskanäle festlegenden Wärmetauscherblechen jeweils ein eine Verwirbelung der Gase bewirkendes Organ vorgesehen ist, das sich über den gesamten Strömungsquerschnitt erstreckt und vorzugsweise aus einem Blechgitter, einem perforierten Blech oder einem Streckmetallgitter besteht.

Analoge Organe zur Gasverwirbelung können auch an der Gaseintrittsseite und an der Gasaustrittsseite des Gehäuses vorgesehen werden, wobei das gasaustrittsseitige Gitter auch zu einem Schutz des Absorbers gegen grobe Verunreinigungen führt und eine Vergleichmäßigung der Strömungsgeschwindigkeit der ausströmenden Gase fördert.

Weitere vorteilhafte Ausgestaltungen der Erfindung sind in Unteransprüchen angegeben.

Die Erfindung wird nachfolgend unter Bezugnahme auf die Zeichnung beispielsweise erläutert; in der Zeichnung zeigt:
- Figur 1: eine Prinzipdarstellung zur Erläuterung des Grundaufbaus des Lichtbogenabsorbers, und
- Figur 2: eine teilweise gebrochen dargestellte Perspektivansicht einer bevorzugten Ausführungsform eines Lichtbogenabsorbers nach der Erfindung.

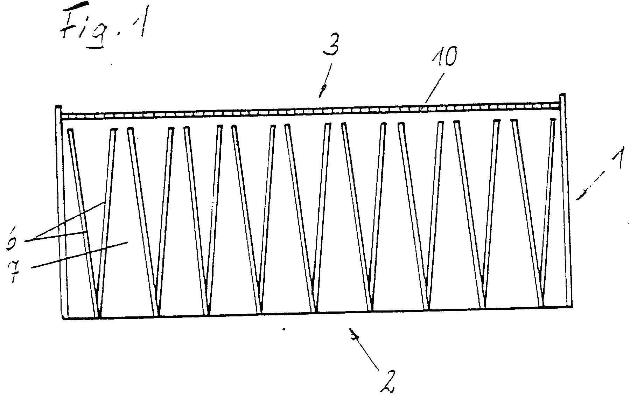

Nach Figur 1 besteht der grundsätzliche Aufbau eines Lichtbogenabsorbers nach der Erfindung aus einem von unten nach oben von den heißen Gasen durchströmbaren Gehäuse 1 mit einer Gaseintrittsseite 2 und einer Gasaustrittsseite 3, wobei in dem Gehäuse eine Mehrzahl von Wärmetauscherblechen 6 V-förmig angeordnet sind, und zwar derart, daß jeweils zwischen einer V-Struktur und der angrenzenden V-Struktur ein sich zur Gasaustrittsseite hin verjüngender Strömungskanal 7 entsteht.

An der Gasaustrittsseite 3 ist ferner ein Verwirbelungsgitter 10 vorgesehen.

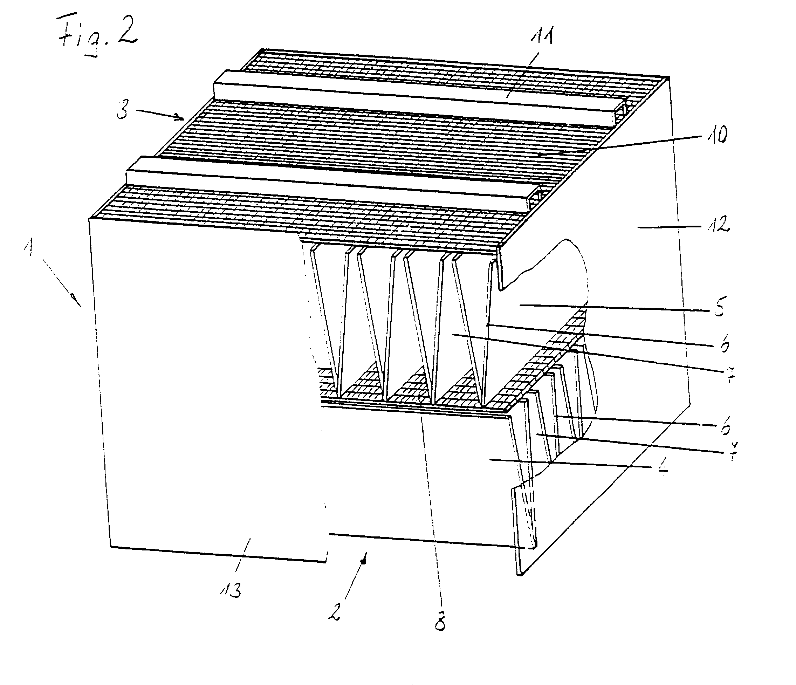

Gemäß der in Figur 2 gezeigten konkreten Ausgestaltung eines Lichtbogenabsorbers nach der Erfindung besteht dieser aus einem quaderförmigen Gehäuse 1, das als Schweiß-, Niet- oder Schraubkonstruktion ausgeführt sein kann und Seitenwände 12 sowie Stirnwände 13 aufweist. Die jeweilige Konstruktion ist so ausgeführt, daß eine stabile und den auftretenden Druckbelastungen problemfrei standhaltende Anordnung erzielt wird.

Das Gehäuse 1 weist bodenseitig eine Gaseintrittsseite 2 und gegenüberliegend eine Gasaustrittsseite 3 auf. An der Gasaustrittsseite 3 ist eine gitterartige Abdeckung 10 in Form eines Blechgitters, eines perforierten Blechs oder eines Streckmetallgitters angebracht, wobei zur Stabilitätserhöhung zumindest ein sich über die jeweilige Öffnung erstreckendes und mit der Rahmenkonstruktion verbundenes Versteifungselement 11 vorgesehen sein kann. Ein entsprechendes gitterartiges Organ, wie die gasaustrittsseitig vorgesehene Abdeckung 10 kann auch an der Gaseintrittsseite 2 vorgesehen werden.

Der Innenraum des Gehäuses ist vorzugsweise mittig durch ein Verwirbelungsorgan 8 unterteilt, das analog den eintritts- und austrittsseitig vorgesehenen Abdeckungen aus einem Blechgitter, einem perforierten Blech oder einem Streckmetallgitter oder einem vergleichbaren Element besteht, das eine ausgeprägte Verwirbelungsfunktion für die durchtretenden Gase besitzt.

Sowohl in dem unterhalb als auch in dem oberhalb des Verwirbelungsorgans 8 befindlichen Teilraum sind durch eine Mehrzahl von Wärmetauscherblechen 6 sich verjüngende, V-förmige Strömungskanäle 7 ausgebildet.

Die untere, d. h. zuströmseitig gelegene Gruppe 4 von Wärmetauscherblechen ist in Richtung der Breite des Gehäuses orientiert, während die Wärmetauscherbleche 6 der oberen Gruppe 5 quer dazu, d. h. in Richtung der Tiefe des Gehäuses 1 orientiert sind.

Zuströmseitig grenzen die benachbarte Strömungskanäle 7 festlegenden Wärmetauscherbleche 6 jeweils unmittelbar aneinander, während die jeweils einen Strömungskanal 7 bildenden Wärmetauscherbleche 6 abströmseitig voneinander einen geringen Abstand besitzen, so daß ein schlitzförmiger Gasauslaß geschaffen wird.

Die heißen Lichtbogengase treten von unten, d. h. über die Gaseintrittsseite 2 in das Gehäuse 1 ein und kühlen sich beim Überströmen der Wärmetauscherbleche 6 sehr stark ab, da durch die V-förmig zusammenlaufenden Strömungskanäle und auch durch die Wirkung des zwischen den beiden Gruppen von senkrecht zueinander angeordneten Strömungskanälen 7 vorgesehenen Verwirbelungsorgans 8 eine sehr ausgeprägte Turbulenz geschaffen und dadurch ein überraschend wirksamer Wärmeübergang auf die Wärmetauscherbleche 6 erreicht wird.

Beispielsweise konnte mit einem Lichtbogenabsorber von der dargestellten Art bei einer Gaseintrittstemperatur von 950°C eine Temperatur von etwa 30°C an der Gasaustrittsseite 3 erzielt werden. Bei dem konkret ausgeführten Lichtbogenabsorber betrug die Breite des Gehäuses 1 etwa 600 mm, die Tiefe etwa 700 mm und die Höhe etwa 500 mm, und es wurden als Wärmetauscherbleche in den beiden Gruppen 4, 5 insgesamt jeweils 10, V-Stahlbleche mit einer Stärke von 1,5 mm verwendet.

Die bezogen auf die erzielbare Abkühlleistung äußerst kompakte Gehäuseform des Lichtbogenabsorbers nach der Erfindung ermöglicht es auch, diesen Absorber direkt auf eine luftisolierte Schaltzelle einer Mittelspannungsschaltanlage aufzusetzen und auf diese Weise aufwendige Kanäle zur weiteren Gasführung zu vermeiden.

## Patentansprüche

1. Lichtbogenabsorber, insbesondere für luftisolierte Schaltzellen von Mittelspannungsanlagen,
**gekennzeichnet**
durch ein der Abkühlung der Lichtbogengase dienendes, eine Gaseintrittsseite (2) und eine Gasaustrittsseite (3) aufweisendes Gehäuse (1) sowie eine Mehrzahl von im Strömungsweg der durchströmenden Gase innerhalb des Gehäuses (1) angeordneten Wärmetauscherblechen (6), die den Gehäuseinnenraum in einzelne sich in Strömungsrichtung verjüngende, jeweils einen schlitzförmigen Gasauslaß aufweisende Kanäle (7) unterteilen.

2. Lichtbogenabsorber nach Anspruch 1,
dadurch **gekennzeichnet**,
daß im Gehäuse (1) zumindest zwei Gruppen (4, 5) von in Strömungsrichtung der Gase aufeinanderfolgenden, jeweils sich verjüngende Strömungskanäle (7) bildenden Wärmetauscherblechen (6) vorgesehen sind, und daß die Wärmetauscherbleche (6) aufeinanderfolgender Gruppen (4, 5) relativ zueinander unter einem Winkel angeordnet sind.

3. Lichtbogenabsorber nach Anspruch 2,
dadurch **gekennzeichnet,**
daß die Wärmetauscherbleche (6) aufeinanderfolgender Gruppen (4, 5) senkrecht zueinander angeordnet sind.

4. Lichtbogenabsorber nach einem der vorhergehenden Ansprüche,
dadurch **gekennzeichnet,**
daß zumindest zwischen aufeinanderfolgenden Gruppen (4, 5) von sich verjüngende Strömungskanäle (7) festlegenden Wärmetauscherblechen (6) jeweils ein eine Verwirbelung der Gase bewirkendes, flächig ausgebildetes Organ (8) vorgesehen ist.

5. Lichtbogenabsorber nach Anspruch 4,
dadurch **gekennzeichnet**,
daß an der Gasaustrittsseite (3) und gegebenenfalls auch an der Gaseintrittsseite (2) des Gehäuses (1) ein eine Gasverwirbelung bewirkendes und gleichzeitig eine Abdeckung bildendes, flächig ausgebildetes Organ (8) vorgesehen ist.

6. Lichtbogenabsorber nach Anspruch 4 oder 5,
dadurch **gekennzeichnet**,
daß das eine Verwirbelung der Gase bewirkende Organ (8) aus einem Blechgitter, einem perforierten Blech oder einem Streckmetallgitter besteht.

7. Lichtbogenabsorber nach einem der vorhergehenden Ansprüche,
dadurch **gekennzeichnet,**
daß als Wärmetauscherbleche (6) ebene Bleche vorgesehen sind, die V-förmige Strömungskanäle (7) mit schlitzförmigem Gasauslaß bilden.

8. Lichtbogenabsorber nach einem der vorhergehenden Ansprüche,
dadurch **gekennzeichnet,**
daß die Anzahl der von den Wärmeleitblechen (6) gebildeten Strömungskanäle (7) in in Strömungsrichtung aufeinanderfolgenden Gruppen (4, 5) gleich ist.

9. Lichtbogenabsorber nach einem der vorhergehenden Ansprüche,
dadurch **gekennzeichnet,**
daß jede Gruppe von kanalbildenden Wärmeleitblechen (6) in einem Gehäusemodul angeordnet ist und mehrere Modulgehäuse in Strömungsrichtung aufeinanderfolgend miteinander verbindbar, insbesondere miteinander verschraubbar ausgebildet sind.

10. Lichtbogenabsorber nach einem der vorhergehenden Ansprüche,
dadurch **gekennzeichnet**,
daß die von den Wärmeleitblechen (6) gebildeten Strömungskanäle (7) in Strömungsrichtung eine wesentlich geringere Abmessung als in ihrer quer zur Strömungsrichtung verlaufenden Längserstreckung besitzen.

11. Lichtbogenabsorber nach einem der vorhergehenden Ansprüche,
dadurch **gekennzeichnet**,
daß das Gehäuse (1) als Schweiß-, Niet- und/oder Schraubkonstruktion ausgeführt ist und insbesondere aus einer verschweißten Rahmenkonstruktion und mit dieser Rahmenkonstruktion verschraubten Seiten- und Stirnwandungen (12, 13) besteht.

## Claims

1. Arc absorber, in particular for air insulated switch cells of medium voltage systems, characterized by a housing (1) serving for the cooling of the arc gases and having a gas inlet side (2) and a gas outlet side (3) and also a plurality of sheet metal heat exchanger plates (6) arranged inside the housing (1) in the flow path of the throughflowing gases which subdivide the inner space of the housing into individual passages (7) tapering in the flow direction and each having a slot-like gas outlet.

2. Arc absorber in accordance with claim 1, characterized in that at least two groups (4, 5) of sheet metal heat exchanger plates (6) following one another in the flow direction of the gases and respectively forming tapering flow passages (7) are provided in the housing (1); and in that the sheet metal heat exchanger plates (6) of sequential groups (4, 5) are arranged at an angle relative to one another.

3. Arc absorber in accordance with claim 2, characterized in that the sheet metal heat exchanger plates (6) of sequential groups (4, 5) are arranged perpendicular to one another.

4. Arc absorber in accordance with one of the preceding claims, characterized in that a respective areally designed member (8) bringing about a swirling of the gases is provided at least between sequential groups (4, 5) of sheet metal heat exchanger plates (6), which define tapering flow passages (7).

5. Arc absorber in accordance with claim 4, characterized in that an areally shaped member (8), which brings about a gas swirling and simultaneously forms a cover, is provided at the gas outlet side (3) and optionally also at the gas inlet side (2) of the housing (1).

6. Arc absorber in accordance with claim 4 or 5, characterized in that a member (8), which brings about a swirling of the gases consists of a sheet metal grid, a perforated sheet metal plate or an expanded metal grid.

7. Arc absorber in accordance with one of the preceding claims, characterized in that flat sheet metal plates are provided as sheet metal heat exchanger plates (6) and form V-shaped flow passages (7) with a slot-like gas outlet.

8. Arc absorber in accordance with one of the preceding claims, characterized in that the number of the flow passages (7) formed by the sheet metal heat conducting plates (6) is the same in the groups (4, 5) which follow one another in the flow direction.

9. Arc absorber in accordance with one of the preceding claims, characterized in that each group of passage forming sheet metal heat conducting plates (6) is arranged in a housing module and a plurality of module housings are designed to be connectable to one another while following one another in the flow direction and are in particular designed to be bolted to one another.

10. Arc absorber in accordance with one of the preceding claims, characterized in that the flow passages (7) formed by the sheet metal heat exchanger plates (6) have a substantially smaller dimension in the flow direction than in their longitudinal extent, extending transversely to the flow direction.

11. Arc absorber in accordance with one of the preceding claims, characterized in that the housing (1) is designed as a welded, riveted, and/or screwed construction, and in particular of a welded frame construction and of side and end walls (12, 13) screwed to this frame construction.

## Revendications

1. Dispositif absorbant des arcs électriques, destiné en particulier à des cabines de commutation isolées à l'air d'installations moyenne tension,
**caractérisé**
par une enceinte (1) servant au refroidissement des gaz d'arc électrique et présentant un côté (2) d'entrée des gaz et un côté (3) de sortie des gaz, ainsi qu'une pluralité de tôles (6) d'échange de chaleur qui sont disposées à l'intérieur de l'enceinte (1) dans le trajet d'écoulement des gaz qui s'écoulent en le traversant, et qui subdivisent l'espace intérieur de l'enceinte en canaux individuels (7) qui vont en se rétrécissant dans la direction d'écoulement, en présentant chacun un orifice de sortie des gaz en forme de fente.

2. Dispositif absorbant des arcs électriques selon la revendication 1,
**caractérisé en ce que**
dans l'enceinte (1) sont prévus au moins deux groupes (4, 5) de tôles (6) d'échange de chaleur qui se suivent dans la direction d'écoulement des gaz et qui forment des canaux d'écoulement (7) qui vont en se rétrécissant chacun, et en ce que les tôles (6) d'échange de chaleur de groupes (4, 5) qui se suivent sont disposées en formant un angle les unes par rapport aux autres.

3. Dispositif absorbant des arcs électriques selon la revendication 2,
**caractérisé en ce que**
les tôles (6) d'échange de chaleur de groupes (4, 5) qui se suivent sont disposées perpendiculairement les unes aux autres.

4. Dispositif absorbant des arcs électriques selon l'une des revendications précédentes,
**caractérisé en ce que**
au moins entre des groupes (4, 5), qui se suivent, de tôles (6) d'échange de chaleur déterminant des canaux d'écoulement (7) qui vont en se rétrécissant, dans chaque cas est prévu un organe (8) qui a une forme plate et mince et qui provoque un tourbillonnement des gaz.

5. Dispositif absorbant des arcs électriques selon la revendication 4,
**caractérisé en ce que**
un organe (8) de forme plate et mince, provoquant un tourbillonnement des gaz et formant en même temps un élément de recouvrement, est prévu du côté (3) de la sortie des gaz, et le cas échéant, également du côté (2) de l'entrée des gaz de l'enceinte (1).

6. Dispositif absorbant des arcs électriques selon la revendication 4 ou 5,
**caractérisé en ce que**
un organe (8) provoquant un tourbillonnement des gaz est constitué d'une grille de tôle, d'une tôle perforée, ou d'une grille de métal déployé.

7. Dispositif absorbant des arcs électriques selon l'une des revendications précédentes,
**caractérisé en ce que**
l'on prévoit, en tant que tôles (6) d'échange de chaleur, des tôles planes qui forment des canaux d'écoulement (7) en forme de V, comportant un orifice de sortie de gaz en forme de fente.

8. Dispositif absorbant des arcs électriques selon l'une des revendications précédentes,
**caractérisé en ce que**
le nombre des canaux d'écoulement (7) formés par les tôles (6) conductrices de chaleur est identique dans les groupes (4, 5) qui se suivent dans la direction d'écoulement.

9. Dispositif absorbant des arcs électriques selon l'une des revendications précédentes,
**caractérisé en ce que**
chaque groupe de tôles (6) conductrices de chaleur formant des canaux est disposé dans un module d'enceinte et en ce que plusieurs corps modulaires peuvent être reliés entre eux à la suite les uns des autres dans la direction d'écoulement, en particulier en étant vissables les uns aux autres.

10. Dispositif absorbant des arcs électriques selon l'une des revendications précédentes,
**caractérisé en ce que**
les canaux d'écoulement (7) formés par les tôles (6) conductrices de chaleur ont, dans la direction d'écoulement, une dimension sensiblement plus faible que dans leur étendue longitudinale disposée transversalement à la direction d'écoulement.

11. Dispositif absorbant des arcs électriques selon l'une des revendications précédentes,
**caractérisé en ce que**
l'enceinte (1) est réalisée en tant que structure soudée, rivetée et/ou vissée, et en particulier en ce qu'elle est constituée d'une structure de cadre soudée et de parois de côté et frontales (12, 13) vissées sur cette structure de cadre.
